# EUROPÄISCHE PATENTSCHRIFT

(11) **EP 0 299 172 B1**
(45) Veröffentlichungstag und Bekanntmachung des Hinweises auf die Patenterteilung: **11.08.1993**
(21) Anmeldenummer: 88108222.6
(22) Anmeldetag: 24.05.1988
(51) Int. Cl.: C09J 7/02, G09F 7/12

(54) **Selbstklebefolie**
Self-adhesive sheet
Feuille auto-adhésive

(30) Priorität: 16.07.1987 DE 3723498
(43) Veröffentlichungstag der Anmeldung: 18.01.1989
(73) Patentinhaber: X-FILM GMBH, D-51491 Overath (DE)
(72) Erfinder: Vossloh, Hans-Jürgen, D-5216 Niederkassel (DE)
(74) Vertreter: Dahlmann, Gerhard, Dipl.-Ing.

(56) Entgegenhaltungen:
- FR-A- 1 468 805
- FR-A- 2 507 196
- GB-A- 2 187 023

## Beschreibung

Die Erfindung betrifft eine Selbstklebefolie mit einer Klebstoffschicht und mit einem, einen Trenneffekt aufweisenden Trägermaterial, bei der vor ihrem Aufbringen auf eine Benutzungsunterlage das Trägermaterial von der Klebstoffschicht abgezogen wird.

Selbstklebefolien haben eine sehr große Verbreitung im Markt gefunden und werden für vielerlei Zwecke eingesetzt. Die bekannteste Ausführungsform besteht in der Selbstklebefolie, die für den Klebeeffekt mit einer Klebstoffschicht beschichtet ist und die mit einem Trägermaterial zur Abdeckung der Klebstoffschicht versehen ist. Das Trägermaterial selbst ist zumindestens auf seiner der Klebstoffschicht zugewandten Seite so ausgebildet, daß gegenüber der Klebstoffschicht ein Trenneffekt eintritt. Dieser kann beispielsweise durch das Beschichten des Trägermaterials mit Silikonen erreicht werden.

Nach dem Abziehen des Trägermaterials von der Klebstoffschicht und damit von der Selbstklebefolie ist die letztere für den Klebevorgang bereit. Die Klebefolien können flächendeckend als große Teilstücke, z.B. für das Bekleben von Möbeloberflächen verwendet werden. Sehr häufig werden aber auch die Klebefolien zu graphischen Elementen zerschnitten und diese dann auf einem vorhandenen Untergrund aufgeklebt. Es hat sich nun gezeigt, daß das Aufbringen von graphischen Gestaltungen auf einem vorhandenen Untergrund, beispielsweise eine Kraftfahrzeugbeschriftung oder auch Beschriftungen auf Reklametafeln nur sehr schwierig an der dafür vorgesehenen und in der gewollten graphischen Gestaltung anzubringen sind.

Aus diesem Grunde ist man dazu übergegangen, während der Ausbildung der graphischen Gestaltung die Selbstklebefolie auf dem Trägermaterial zu belassen. Die Selbstklebefolie wird entsprechend zerschnitten und die überflüssigen Teile der Folie entfernt. Hiernach ist die graphische Gestaltung auf dem Trägermaterial in der richtigen Positionierung vorhanden. Für die Übertragung der graphischen Gestaltung auf eine Benutzungsunterlage wurde ein "Tape" oder Übertragungsmaterial benutzt, das ebenfalls eine Klebstoffschicht aufweist und das auf die graphische Gestaltung aufgeklebt wurde. Danach wurde das Trägermaterial abgelöst und die graphische Darstellung mit Hilfe des Übertragungsmaterials auf der Benutzungsunterlage positioniert und aufgeklebt. Dieses Verfahren ermöglichte eine eindeutige Positionierung der einzelnen graphischen Teile zueinander.

Dieses Verfahren hat jedoch den Nachteil, daß neben der Selbstklebefolie mit Trägermaterial ein zusätzliches Übertragungsmaterial erforderlich ist. Das Übertragungsmaterial liegt nicht immer in den gewünschten Abmessungen vor. Sofern es zu klein ist, sind Stückelungen erforderlich, welche die Positionierung beeinflussen können. Bei zu großen Formaten fällt unnötiger Verschnitt an. Auch ist die Bereitstellung des zusätzlichen Übertragungsmaterials umständlich. Schließlich besteht auch noch der Nachteil, daß bei einem längere Zeit nichtbenutztem Übertragungsmaterial eine unerwünschte Veränderung der Klebeeigenschaften auftreten kann.

Der vorliegenden Erfindung liegt die Aufgabe zugrunde, hier Abhilfe zu schaffen und eine leicht handhabbare und eine sichere Positionierung der graphischen Gestaltung ergebende Selbstklebefolie zu erstellen.

Die Lösung der gestellten Aufgabe wird bei einer Selbstklebefolie der eingangs genannten Gattung, erfindungsgemäß dadurch erreicht, daß die Selbstklebefolie ein mit der Außenseite des Trägermaterials ablösbar verbundenes, klebstoffbeschichtetes Übertragungsmaterial hat. Gemäß der Erfindung wird somit die Selbstklebefolie nicht nur mit dem Trägermaterial, sondern auch mit dem Übertragungsmaterial ausgestattet. Die Gesamtfolie besteht somit aus drei Schichten, der Selbstklebefolie, dem Trägermaterial und dem Übertragungsmaterial. Bei einer solchen Ausbildung kann die Selbstklebefolie auf dem Trägermaterial graphisch gestaltet werden. Nach Fertigstellung der graphischen Darstellung und Entfernen des Schnittabfalls, wird das Übertragungsmaterial von dem Trägermaterial gelöst und auf der Selbstklebefolienseite wieder aufgebracht. Das Übertragungsmaterial hat in diesem Fall die gleichen Abmessungen wie die vorbereitete Selbstklebefolie. Unnötiger Verschnitt entsteht nicht. Nach dem Aufbringen des Übertragungsmaterials wird das Trägermaterial abgelöst, die graphischen Elemente verbleiben dann an dem Übertragungsmaterial und können mit Hilfe des Übertragungsmaterials auf den vorbereiteten Untergrund aufgebracht werden.

Eine solche Selbstklebefolie kann besonders bevorzugt bei Schneidplottern eingesetzt werden, mit denen die graphischen Gestaltungen nach vorgegebenem Programm in die Selbstklebefolie eingeschnitten werden kann. Der weitergehende Schritt der Erfindung ist somit in der Verwendung der Selbstklebefolie zur Herstellung von aus Klebefolien bestehenden graphischen Gestaltungen auf Benutzungsunterlagen unter Verwendung von Schneidplottern zu sehen, mit denen die graphische Gestaltung in die Folie eingeschnitten wird, wonach die überflüssigen Folienteile aus der Klebefolie entfernt werden, das mit der Außenseite des Trägermaterials verbundene Übertragungsmaterial von dem Trägermaterial abgelöst und auf der gegenüberliegenden Seite der Klebefolie aufgeklebt wird, so daß die graphische Gestaltung von dem Übertragungsmaterial erfaßt wird. Hiernach wird das Trägermaterial abgelöst und die graphische Gestaltung mit Hilfe des Übertragungsmaterials auf die Benutzungsunterlage aufgebracht. Anschließend wird das Übertragungsmaterial entfernt.

Dieses Verfahren ist äußerst einfach in der Handhabung und kann ohne Einsatz weiterer Gestaltungshilfsmittel angewendet werden. So kann mit Hilfe des Plotters in sehr kurzer Zeit eine beliebige Beschriftung aus der Selbstklebefolie ausgeschnitten werden und diese Beschriftung auf einen Omnibus oder dergleichen aufgeklebt werden. Hierbei sei bemerkt, daß der Plotter so eingerichtet ist, daß er zwar die Selbstklebefolie durchschneidet, das Trägermaterial jedoch unbeschädigt läßt. Nach dem Herauslösen der überflüssigen Klebefolienteile kann der graphische Schriftzug beurteilt werden. Sein Aufbringen mit Hilfe des anhaftenden Übertragungsmaterials ist ohne weitere Hilfsmittel möglich.

Der Vorgang wird dadurch unterstützt, daß das Übertragungsmaterial aus durchsichtigem Material besteht. Bereits vor dem festen Verkleben der Klebefolie mit dem Untergrund ist die Lage der einzelnen graphischen Gestaltung auf dem Untergrund durch das durchsichtige Übertragungsmaterial klar erkennbar.

Anhand eines Ausführungsbeispiels ist schematisch der Aufbau der gesamten Folie nachstehend geschildert.

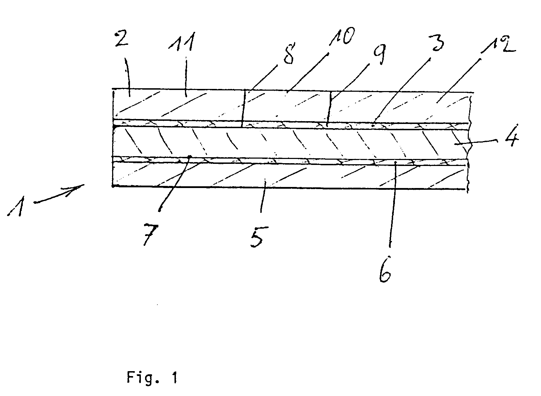

Die Figur zeigt einen Schnitt durch ein Abschnitt der Gesamtfolie 1. Die Gesamtfolie 1 besteht aus der Selbstklebefolie 2 mit der Klebstoffschicht 3, dem Trägermaterial 4 und dem Übertragungsmaterial 5 mit der Klebstoffschicht 6. Auf der von der Klebstoffschicht 3 abgewandten Außenseite 7 des Trägermaterials 4 ist das Übertragungsmaterial 5 mit der Klebstoffschicht 6 aufgebracht. Für die Durchführung des Verfahrens wird die Selbstklebefolie 2 wie bei 8 und 9 angezeigt, beispielsweise vom Messer des Schneidplotters durchtrennt. Der zwischen den Schnitten 8 und 9 liegende Teil 10 der Klebefolie 2 wird in bekannter Weise entfernt. Hiernach wird das Übertragungsmaterial 5 mit der Klebstoffschicht 6 von dem Trägermaterial abgetrennt und auf die gegenüberliegende Seite des Trägermaterials die verbliebenen Teile 11 und 12 der Klebefolie 2 überdeckend aufgeklebt. Hiernach wird das Trägermaterial 4 entfernt und die einzelnen Teile 11, 12 der graphischen Darstellung mit Hilfe des Übertragungsmaterials 5 auf einen entsprechend vorbereiteten Untergrund aufgeklebt. Danach wird das benutzte Übertragungsmaterial 5 entfernt.

## Patentansprüche

1. Selbstklebefolie mit einer Klebstoffschicht und mit einem einen Trenneffekt aufweisenden Trägermaterial, bei der vor ihrem Aufbringen auf eine Benutzungsunterlage das Trägermaterial von der Klebstoffschicht abgezogen wird, gekennzeichnet durch ein mit der Außenseite (7) des Trägermaterials (4) ablösbar verbundenes, eine Klebstoffschicht (6) aufweisendes Übertragungsmaterial (5).

2. Selbstklebefolie nach Anspruch 1, dadurch gekennzeichnet, daß die Übertragungsfolie (5) aus durchsichtigem Material besteht.

3. Verwendung der Selbstklebefolie nach Anspruch 1 zur Herstellung von aus Klebefolien bestehenden graphischen Gestaltungen auf Benutzungsunterlagen unter Verwendung von Schneidplottern, mit denen die graphischen Gestalung in die Folie eingeschnitten wird, wonach die überflüssigen Folienteile aus der Folie entfernt werden, das mit der Außenseite des Trägermaterials verbundene Übertragungsmaterial von dem Trägermaterial abgelöst und auf der gegenüberliegenden Seite der Folie aufgeklebt wird, so daß die graphische Gestaltung von dem Übertragungsmaterial erfaßt wird, hiernach wird das Trägermaterial abgelöst und die graphische Gestaltung mit Hilfe des Übertragungsmaterials auf die Benutzungsunterlage aufgebracht, anschließend wird das Übertragungsmaterial entfernt.

## Claims

1. A self-adhesive sheet with an adhesive coating and a carrier material incorporating a separating effect, from which prior to depositing onto a display surface the carrier material is peeled off the adhesive coating, characterized by an on the outside (7) of the carrier material removable transfer material (5) which carries an adhesive coating (6).

2. A self-adhesive sheet according to claim 1, characterized by the transfer sheet (6) consisting of transparent material.

3. Use of the self-adhesive sheet according to claim 1 for the production of graphic designs consisting of adhesive sheets on carrier surfaces, by use of cutting plotters with which the graphic design is cut from the sheet, after which process the remaining sheet portions are removed from the adhesive sheet which is peeled from the outside of the carrier material combined transfer material and deposited ( glued ) onto the opposite side of the adhesive sheet, so that the graphic design is seized by the transfer material, thereafter the carrier material is removed ( peeled off ) and the graphic design is deposited by means of the transfer material onto the display surface, thereafter the transfer material is removed.

## Revendications

1. Film autocollant comportant une couche de colle et un matériau de support présentant un effet séparateur, selon lequel, avant son dépôt sur une base d'utilisation, le matériau support est retiré de la couche de colle, caractérisé par un matériau de transfert (5) relié de manière détachable à la face externe (7) du matériau de support (4) et comportant la couche de colle (6) .

2. Film autocollant selon la revendication 1, caractérisé en ce que le film de transfert (5) est constitué par un matériau transparent.

3. Application du film autocollant selon la revendication 1 pour la réalisation de configurations graphiques se composant de films autocollants sur des bases d'utilisation par l'emploi de traçeurs à découper, avec lesquels la forme graphique est découpée dans le film, après quoi les parties superflues du film sont détachées du film, le matériau de transfert relié à la face externe du matériau support est détaché du matériau support et est collé sur la face opposée du film, de sorte que la configuration graphique est saisie par le matériau de transfert, ensuite le matériau support est retiré et la configuration graphique est déposée sur la base d'utilisation à l'aide du matériau de transfert, et pour finir le matériau de transfert est enlevé.
